(19) Europäisches Patentamt / European Patent Office / Office européen des brevets

(11) **EP 2 849 150 A1**

(12) **EUROPEAN PATENT APPLICATION**

(43) Date of publication:
**18.03.2015 Bulletin 2015/12**

(51) Int Cl.:
***G06T 7/20*** (2006.01)

(21) Application number: **13306268.7**

(22) Date of filing: **17.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Fleureau, Julien**
**35576 Cesson Sevigné (FR)**
• **Tariolle, François-Louis**
**35576 Cesson Sevigné (FR)**
• **Guillotel, Philippe**
**35576 Cesson Sevigné (FR)**
• **Le Clerc, François**
**35576 Cesson Sevigné (FR)**

(74) Representative: **Perrot, Sébastien et al**
**Technicolor R&D France Snc**
**975, avenue des Champs Blancs**
**CS 17616**
**35576 Cesson-Sévigné Cedex (FR)**

(54) **Method for capturing the 3D motion of an object, unmanned aerial vehicle and motion capture system**

(57) The present invention generally relates to a method for capturing the 3D motion of an object, an unmanned aerial vehicle and a motion capture system.

The present invention discloses the use of a camera and a depth sensor onboard an Unmanned Aerial Vehicle (UAV) the trajectory of which is controlled in such a way that potentially occluded passive markers always remain in the field of view of the camera.

In that way, the camera onboard the UAV provides complementary localization means for some of the markers placed on the object that may occasionally, because of occlusions, not be visible to a sufficient number of cameras of the optical motion capture system during a motion capture session, and as a result not localizable by the camera setup of the motion capture system.

Fig. 3

## Description

### 1. Field of invention.

The invention generally relates to a method for capturing the 3D motion of an object. It relies on a motion capture system and an unmanned aerial vehicle.

### 2. Technical background.

The animation of computer-generated (CG) characters is an essential component of video game development, and is also increasingly used in the film-making industry. In order to obtain more realistic results, animations are often based on the performance of real actors, following a process known as performance-driven animation. In this process, the performances of the actors are analyzed and recorded by a motion capture system (often abbreviated as "mocap") and then transferred to the animation of the considered CG character.

Specifically, the invention is concerned with a motion capture system which consists of a camera setup and an acquisition system.

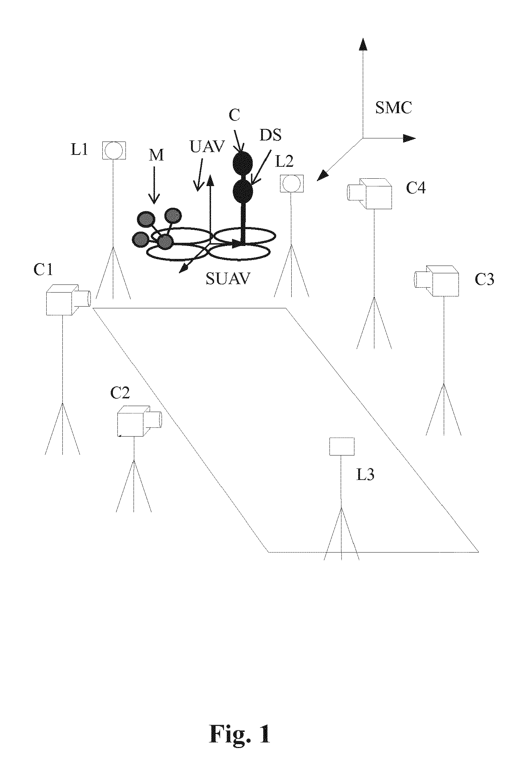

As illustrated on Fig. 1, the camera setup consists of a set of calibrated cameras positioned around the capture volume where actors or more generally objects, perform, in such a way that any point within this capture volume is seen by a minimum of 2 cameras, and preferably more.

The actors wear dedicated capture suits, on which passive markers are placed at the locations of the main body articulations. The actors play the roles of the film characters or virtual creatures to be animated inside the capture volume, as defined by the scenario. During their performance, the optical motion capture system tracks and records the locations of the markers in each of the camera images.

According to methods known from prior art, and described for instance in the paper by G.B. Guerra-Filhol entitled "Optical Motion Capture: Theory and Implementation", published in the Journal of Theoretical and Applied Informatics in 2005, the detected marker locations at each acquisition instant in the camera images are set in correspondence both temporally and spatially, to compute the sequence of 3D locations of each marker in the capture volume, for the duration of the capture.

An articulated body model of the actor is computed from this data at regular time intervals during the capture session, and retargeted on a pre-computed corresponding model of the CG character. The retargeting translates the tracking data acquired on the actor to the geometry of the body of the CG character. The tracked retargeted body model is eventually used to drive the animation of the virtual character.

An issue with such a motion capture process is that some of the markers occasionally get hidden to the cameras of the camera setup because of occlusions. An occlusion occurs whenever an element of the props, or part of an actor, stands in the line of sight between a camera and a marker. It sometimes happens that, for short periods of time, some of the markers are not visible to a sufficient number of cameras for their 3D localization in the capture volume to be performed accurately. In these situations, the missing parts of the affected markers tracks need to be reconstructed by human operators, a time-consuming and expensive process.

A well-known solution to this problem is to replace the passive markers by autonomous markers equipped with built-in inertial measurement units (IMUs). Knowing the initial localization of the marker at the start of the capture session, the IMUs can provide an estimate of the marker trajectory over time, without resorting to triangulation from the mocap setup cameras.

However, IMUs are known to suffer from severe drift problems, which likely degrade the accuracy of the estimated trajectories, and as a result the quality of the animation.

### 3. Summary of the invention.

The present invention solves at least one of the aforementioned drawbacks by using a camera and a depth sensor onboard an Unmanned Aerial Vehicle (UAV) the trajectory of which is controlled in such a way that potentially occluded passive markers always remain in the field of view of the camera.

In that way, the camera onboard the UAV provides complementary localization means for some of the markers placed on the object that may occasionally, because of occlusions, not be visible to a sufficient number of cameras of the optical motion capture system during a motion capture session, and as a result not localizable by the camera setup of the motion capture system.

Additional images of the markers which are not visible to a sufficient number of cameras of the camera setup of the mocap system are thus captured from the camera onboard the UAV. Accurate 3D localizations of the markers in the capture volume may then be performed without a time-consuming and expensive process (reconstruction by human operators) and without using autonomous markers equipped with built-in inertial measurement units (IMUs).

More precisely, the present invention relates to a method for capturing the 3D motion of an object from the 3D locations of markers placed on this object. The method is **characterized in that** the 3D location of at least one marker is determined from at least one image taken by a camera and from a depth information obtained from a depth sensor.

According to an embodiment, the camera and the depth sensor are moveable along a same motion trajectory determined in such a way that at least one marker placed on the object always remains in the field of view of the camera and the depth sensor, which are set up in such a way that their optical centers are close to one another.

According to an embodiment, the 3D location of at least one marker placed on the object is determined from the 3D locations of at least another one markers placed on an unmanned aerial vehicle.

According to another of its aspects, the invention relates to an unmanned aerial vehicle **characterized in that** it comprises a camera, a depth sensor and a controller for controlling its trajectory in such a way that at least one marker placed on an object always remain in the field of view of the camera and the depth sensor.

According to an embodiment, the camera C and the depth sensor DS are parts of a same device.

According to yet another of its aspects, the invention relates to a motion capture system comprising a camera setup, **characterized in that** the camera setup is completed by a camera and a depth sensor both onboard an unmanned aerial vehicle.

According to an embodiment, the unmanned aerial vehicle conforms to the claim 4 or 5.

The specific nature of the invention as well as other objects, advantages, features and uses of the invention will become evident from the following description of a preferred embodiment taken in conjunction with the accompanying drawings.

**4. List of figures.**

The embodiments will be described with reference to the following figures:

> **Fig. 1** shows schematically an example of a TV or film shooting studio,
> **Fig. 2** shows schematically a diagram illustrating a possible control scheme of the attitude and position of a UAV,
> **Fig. 3** shows a diagram of the steps of an embodiment of the method for capturing the 3D motion of an object,
> **Fig. 4** shows the steps of an embodiment of a step of the method for capturing the 3D motion of an object, and
> **Fig. 5** shows an example of an internal architecture of a device configured to control the navigation of an unmanned aerial vehicle.

**5. Detailed description of a preferred embodiment of the invention.**

The invention is not limited to the capture of the motion of an actor as illustrated by the TV or film shooting studio illustrated in Fig. 1, but may extend to any indoor or outdoor professional environment which is adapted to capture the 3D motion of an object from the 3D locations of markers placed on this object.

The gist of the invention is to complement the motion capture system by an extra camera and depth sensor mounted on an unmanned aerial vehicle. For the sake of comprehension, the principles of optical motion capture are briefly outlined below, followed by the description of an embodiment of the invention.

**Fig. 1** shows an example of a TV or film shooting studio.

A TV or film shooting studio is a room equipped with a motion capture system which comprises a camera setup and an acquisition system.

The camera setup comprises cameras, here four referenced C1 to C4, and light sources, here three referenced L1 to L3.

The TV or film shooting studio is surrounded, at least partially, by walls which are painted in a uniform green or blue colour, so that mobile objects or actors or props filmed in the studio can be easily segmented out from the background of the studio using chroma keying. The studio needs to be large enough to hold the camera setup and make sure that the volume captured by this setup, called the capture volume, allows sufficient room for the props and the performance of the mobile objects and/or actors.

The motion capture cameras, here C1-C4, are positioned all around the capture volume usually in the center of the room, in such a way that any point within this volume is seen by a minimum of 2 cameras, and preferably more. The cameras must be synchronized, typically from an external genlock signal, and operate at sufficiently high frame rates (to avoid motion blur) and with sufficient resolution to accurately estimate the motion trajectories of the markers used for motion capture. Furthermore, the cameras are calibrated, both with respect to their intrinsic and extrinsic parameters, so that the location on a camera image of the projection of any 3D point of the motion capture volume in its viewing frustum, referenced in some 3D coordinate system $S_{MC}$, can be accurately predicted.

Lighting in the TV or film shooting studio relies on a set of fixed light sources, here L1 to L3 that provides an ideally diffuse and uniform lighting within the capture volume.

The time-stamped video signals captured by the camera setup are transferred and recorded from each of the cameras to a storage device, typically hard disk drives, thanks to the acquisition system (not represented in **Fig. 1).** The acquisition system also features a user interface and software for controlling the operation of the cameras and visualizing their outputs.

Tracking the 3D motion of an object (or actor) equipped with markers using such a motion capture system is well-known from prior art, and follows the principles described for instance by G.B. Guerra-Filho in "Optical Motion Capture: Theory and Implementation", published in the Journal of Theoretical and Applied Informatics in 2005.

The tracking method comprises detecting the locations of the markers in the image captured by the cameras. This is straightforward, as markers, owing to their high reflectivity, appear as bright spots in the images. Next, spatial correspondences between the detected markers locations across camera images are established. A 3D point in the 3D coordinate system $S_{MC}$ having generated a detected location in a camera image lies on a viewing line going through this location in the camera image plane and the camera projection center. Spatial correspondences between detected locations across camera views, corresponding to the projections in the views of markers, can be determined by the fact that the above-defined viewing lines for each considered camera intersect at the location of the marker in the 3D coordinate system $S_{MC}$. The locations and orientations of the image plane and projection center for each camera are known from the camera calibration data. Next, the detected marker locations set in correspondence, and thus corresponding to the projections of markers, are tracked over time for each camera image. Temporal tracking typically relies on non-rigid point set registration techniques, wherein a global mapping is determined between the distributions of marker locations between two consecutive images of the same camera in consecutive frames. Next, the marker tracks are labeled. This can be performed manually, or alternatively the labels can be set automatically. Automatic labeling can benefit from a known initial layout of markers, for instance, in the case of body motion capture, the "T-stance" where the person stands with legs apart and both arms stretched away from the body. Next, the captured data is post-processed, especially in order to fill holes caused by marker occlusion. This can be automated up to some point using priors from a model of the captured object (*e.g.*, an articulated body model) that constrains the locations of the missing markers when most of the markers locations are known, but needs to be performed manually if too many marker locations are missing.

Optionally, specifically for body motion capture, an articulated human body is fitted to the 3D locations of markers at each frame, thus providing data for animating a virtual character (possibly after retargeting if the anthropometric proportions of the actor and the virtual character are different).

According to the invention, the camera setup of the motion capture system is completed by a camera and a depth sensor both onboard an unmanned aerial vehicle (UAV).

At least four non-planar markers M which are detectable by the motion capture system are placed on the UAV schematically represented in **Fig. 1,** where the UAV is represented by the four ovals and the markers M are represented by black filled disks.

The 3D locations of the markers M in the 3D coordinate system $S_{MC}$ are determined from images captured by the camera setup of the motion capture system as described above. A 3D coordinate system $S_{UAV}$ is defined for the UAV. A geometric transformation between the coordinate system $S_{UAV}$ of the UAV and the coordinate system $S_{MC}$ of the motion capture system can be computed because the locations of the markers in these two coordinate systems are known. Indeed, the 3D locations of the markers in $S_{UAV}$ are fixed as the markers are rigidly attached to the UAV and can be measured. The locations of the markers in $S_{MC}$ are provided by the motion capture system.

Let $O_M$, $A_M$, $B_M$ and $C_M$ be the centers of the markers M, $O_{UAV}$, $A_{UAV}$, $B_{UAV}$ and $C_{UAV}$ their respective coordinates in $S_{UAV}$ and $O_{MC}$, $A_{MC}$, $B_{MC}$ and $C_{MC}$ their respective coordinates in $S_{MC}$. The change of coordinate system from $S_{UAV}$ to $S_{MC}$ involves a translation followed by a rotation in 3D space. The translation is represented by a 3x1 vector **T** and the rotation by an orthonormal 3x3 matrix **R**. Consider the vectors $\mathbf{u} = \mathbf{O_M A_M}$, $\mathbf{v} = \mathbf{O_M B_M}$ and $\mathbf{w} = \mathbf{O_M C_M}$. The application of rotation **R** to the known values ($\mathbf{u_{MC}}$, $\mathbf{v_{MC}}$, $\mathbf{w_{MC}}$) of these vectors in $S_{MC}$ yields the known values ($\mathbf{u_{UAV}}$, $\mathbf{v_{UAV}}$, $\mathbf{w_{UAV}}$) of these vectors in $S_{UAV}$. The coefficients of **R** are computed by inverting the 9x9 linear system resulting from these constraints. The coordinates $M_{MC}$ and $M_{UAV}$ respectively in $S_{MC}$ and $S_{UAV}$ of any of the marker centers M are linked by the relation $M_{MC} = \mathbf{R}.(M_{UAV} + \mathbf{T})$ that follows from the definition of the change of coordinate transformation. For a given marker, using the previously computed value of **R** and the known values of $M_{MC}$ and $M_{UAV}$, this relation yields a linear 3x3 system of equations in **T** whose resolution provides the components of the translation.

According to the invention, illustrated in **Fig. 1**, the UAV comprises a camera C, a depth sensor DS and a controller for controlling its trajectory in such a way that at least one marker placed on an object always remain in the fields of view of the camera C and the depth sensor DS, which are set up in such a way that their optical centers are close to one another. The camera C and the depth sensor DS are rigidly attached to the UAV and therefore moveable along the same motion trajectory of the UAV.

According to an embodiment of the UAV, the camera C and the depth sensor DS are part of a same device.

According to an embodiment of the invention, the unmanned aerial vehicle is a drone.

A UAV is a lightweight unmanned aerial vehicle powered by multiple rotors, typically 4 to 8, running on batteries. The UAV is equipped with onboard electronics including processing means, an Inertial Measurement Unit and additional position and velocity sensors for navigation, and with means for wireless communication with a remote apparatus.

The navigation of a UAV can be controlled by a so-called navigation control method usually implemented on a remote station over a dedicated Application Programming Interface (API) which may provide access to low-level controls, such as the speeds of the rotors, and/or to higher-level features such as a target UAV attitude, elevation speed or rotation speed around the vertical axis passing through the UAV center of mass.

The navigation control method can be developed on top of this API in order to control the displacements of the UAV in real-time. The control can be performed manually from a user interface, for instance relying on graphical pads on a mobile device display. Alternatively, the navigation of the UAV can be constrained programmatically to follow a determined motion trajectory. This motion trajectory defines a target 3D position of the center of mass of the UAV in the 3D coordinate system $S_{MC}$ at each time instant after a reference start time.

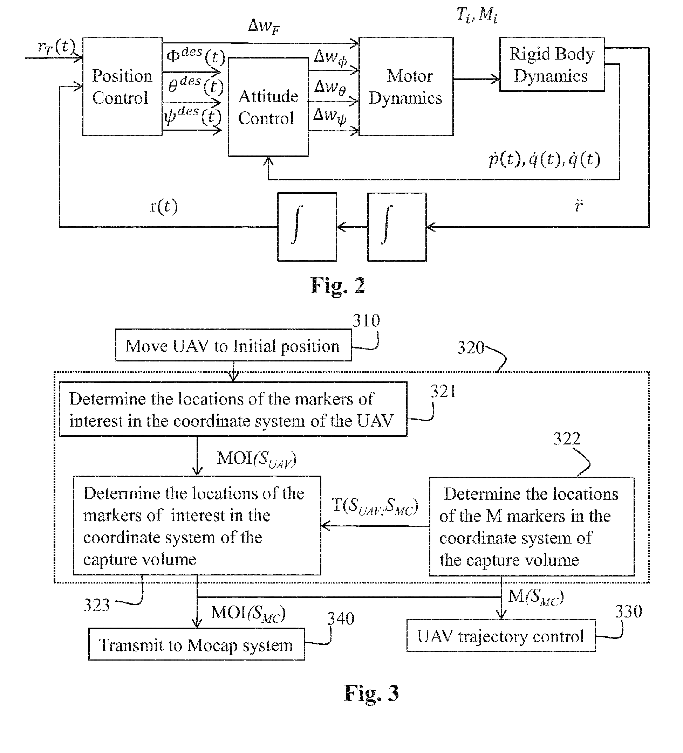

The navigation control method can benefit from the positional estimates of the UAV provided by the motion capture system. Such a closed-loop feedback control of a UAV using the motion capture system is described, for example, in the paper entitled « The GRASP Multiple Micro UA V Testbed », by N. Michael et al., published in the Sept. 2010 issue of the IEEE Robotics and Automation Magazine, Sept. 2010. In this paper, the control of the UAV relies on two nested feedback loops, as shown on **Fig. 2.** The purpose of the loops is to ensure that the actual attitude and position values of the UAV match the target values determined by a target trajectory. Typically, this is obtained by continuously adjusting the control loop parameters in order to minimize the error between a measured and target values, as in well-known PID controllers (see the Wikipedia page on PID controllers, http://en.wikipedia.org/wiki/PIO_controller).

Into more detail, with reference to **Fig. 2**, a Position Control module takes as input, at each time instant *t*, the target 3D position of the UAV center of mass $r_T(t)$ and its estimated position $r(t)$ in the 3D coordinate system $S_{MC}$. According to the invention, the accurate estimates of $r(t)$ provided by the motion capture system, owing to the markers M placed on the UAV, can advantageously be fed into the navigation control method, in order to improve the stability and accuracy of the motion trajectory following.

More precisely, a control loop within the position control module generates, as a function of the positional error $r_T(t)$-$r(t)$, the desired values of the attitude angles $\varphi_{des}(t)$, $\theta_{des}(t)$ and $\psi_{des}(t)$ or the roll, pitch and yaw angles respectively, that stabilize the attitude of the UAV and ensure the desired linear displacement that compensates for the positional error. The Attitude Control module is a second, inner, control loop that generates the increments of the moments $\Delta\omega_\varphi$, $\Delta\omega_\theta$, $\Delta\omega_\psi$ to be produced by the UAV rotors along the roll, pitch and yaw axes respectively, in order to obtain the desired attitude values. In addition, the position control module feeds the motor dynamics module with an extra moment $\Delta\omega_F$ that results in a net force along the vertical axis at the center of gravity of the UAV, allowing the control of its altitude. The Motor Dynamics module translates $\Delta\omega_\varphi$, $\Delta\omega_\theta$, $\Delta\omega_\psi$ and $\Delta\omega_F$ into set point values for the rotor speeds, that are transmitted to the UAV via its communication means, so that the rotor speeds are updated over the API. Using a model of the UAV motors, the Motor Dynamics module translates the updates of the rotors speeds into net forces $T_i$ applied to the UAV along the vertical axes at the location of each rotor, as well as into angular moments $M_i$ along these same axes. From these forces and angular moments, a model of the UAV dynamics allows to compute, in the Rigid Body Dynamics module, the linear acceleration of the UAV and its angular accelerations $\dot{p}(t)$, $\dot{q}(t)$ and $\dot{r}(t)$ in its body frame. These accelerations are fed back to the Position Control and Attitude Control modules, respectively, to provide the inputs to the control loops implemented in these two modules.

Note that the Position Control and Attitude Control loops use measurements, not represented on **Fig. 2**, from the Inertial Measurement Unit and the positional sensors mounted on the UAV, in order to estimate the UAV position and attitude at their inputs.

According to the invention, the method for capturing the 3D motion of an object from the 3D locations of markers placed on an object determines the 3D location of at least one marker from at least one image taken by the camera C and from a depth information (also called range) obtained from the depth sensor DS.

According to an embodiment of the method, the 3D location of at least one marker placed on the object is determined from the markers M.

**Fig. 3** shows a diagram of the steps of an embodiment of such a method.

As explained in detail in the introducing part, one single marker, or more generally a small set of neighboring markers on the capture suit of an actor (or more generally placed on an object), is occulted for short periods of time. These markers are hereafter referred to as "markers of interest". The markers of interest are assumed to have been identified, for example, during rehearsal sessions of the motion capture, and marked with a specific color or textured pattern, so that their visual appearance differs from the other markers used for the motion capture. In the case where the set of markers of interest consist of several markers, each of them is preferably assigned a distinct color or texture pattern, so that each individual marker in the set can easily be detected in the image of the camera onboard the UAV.

At step 310, the UAV is positioned at its desired starting position. For example such a starting position is defined by an altitude $Z_{UAV}$ above the floor of the motion capture studio and the same horizontal location as the markers of interest.

This operation is preferably performed by manually operating a user interface for the control of the UAV navigation.

According to a variant of the step 310, the UAV is approximately positioned at the desired starting position by a manual navigation control, and a fine adjustment of its position is performed automatically based on the detection of the markers of interest in the image taken by the camera onboard the UAV, following the step 320 described below.

At step 320, the 3D locations MOI($S_{MC}$) of the markers of interest are determined in the 3D coordinate system $S_{MC}$ of the capture volume.

According to an embodiment of step 320, illustrated in **Fig. 3**, at step 321, the 3D locations MOI($S_{UAV}$) of N markers of interest are determined in the coordinate system $S_{UAV}$.

First, the 2D locations of the N markers of interest are detected in the image of the camera.

Next, taking into account the range measurements of the N markers of interest provided by the depth sensor DS, their 3D locations MOI$(S_{CAM})$ are computed in a coordinate system $S_{CAM}$ of the camera C. The coordinate system $S_{CAM}$ is defined by the image plane of the camera and its optical axis which is perpendicular to the image plane.

Finally, the 3D locations MOI$(S_{UAV})$ of the N markers of interest are determined by converting the 3D locations MOI$(S_{CAM})$ by help of a 3D geometric transformation T$(S_{CAM;}S_{UAV})$.

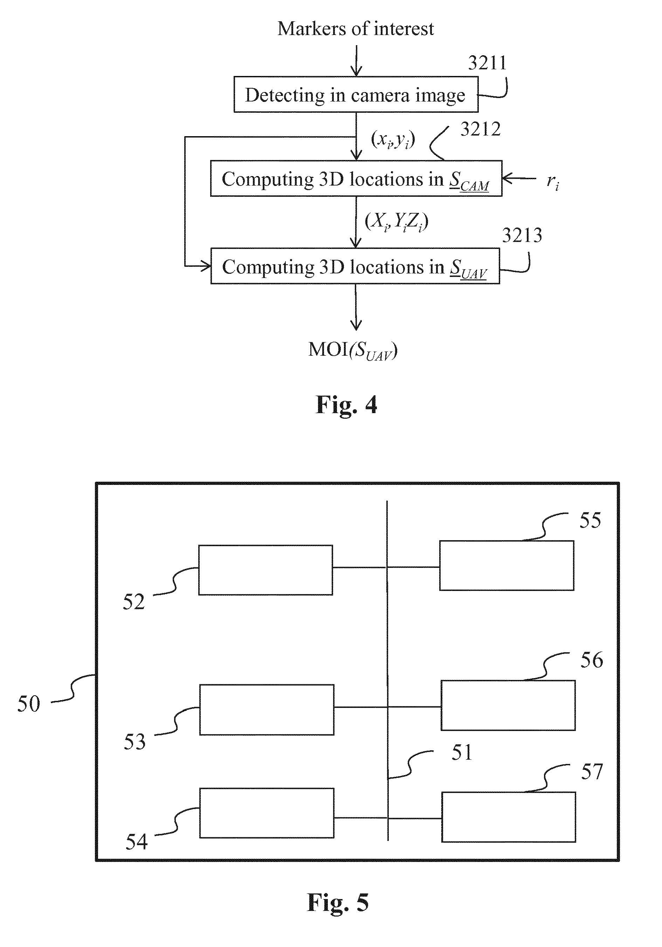

Fig. 4 shows the steps of an embodiment of the step 321. The 3D locations MOI $(S_{UAV})$ in the coordinate system $S_{UAV}$ are determined as follows.

At step 3211, the image coordinates $(x_i, y_i)$ of the N markers of interest with $1 \leq i \leq N$ are detected in an image taken by the camera onboard the UAV. This operation is straightforward using methods known from the state of art, as each of the markers in the set of markers of interest has been tagged with a distinctive color or texture pattern. If a distinctive color is used, detection can be performed by looking for regions of the image whose pixel colors match the known distinctive color. If a distinctive texture pattern is used, the detection can be performed by correlating the image with a set of image patches holding said texture pattern at various scales, and looking for the highest correlation peak over all scales.

At step 3212, the real-world coordinates $(X_i, Y_i, Z_i)$ of the each of the markers of interest $M_i$ in the coordinate system $S_{CAM}$ are computed from their image coordinates $(x_i, y_i)$ determined in step 3211, and from their measured depth (also called range) $r_i$ provided by the depth sensor DS. Based on the known calibration matrix of the camera C, the image coordinates $(x_i, y_i)$ of $M_i$ are converted to physical coordinates in the retinal plane of the camera $\left(x_i^{RP}, y_i^{RP}\right)$, using methods known from the state of art and described for instance in chapter 3 of the tutorial entitled «Visual 3D modeling from images», by M. Pollefeys, published in the Proceedings of the 2004 Vision, Modeling and Visualization Conference VMV'04. The distance between the optical centre of the camera C and its retinal plane is the focal length $f$ of the camera, known from the camera calibration. The horizontal and vertical coordinates of $M_i$ are in the camera coordinate system $S_{CAM}$ are then computed from straightforward trigonometry as $X_{i,} = x_i^{RP} * (Z_i/f)$ and $Y_{i,} = y_i^{RP} * (Z_i/f)$. The measured range $r_i$ of $M_i$ is such that $r_i^2 = X_i^2 + Y_i^2 + Z_i^2$. $X_i$, $Y_i$, and $Z_i$ are

computed by solving this system of three equations with three unknowns.

At step 3213, the real-world coordinates of each of the markers of interest $M_i$ are converted from the coordinate system $S_{CAM}$ of the camera to the coordinate system $S_{UAV}$ of the UAV by means of the known transform T$(S_{CAM;}S_{UAV})$ between the two coordinate systems. Indeed, because the camera C is rigidly attached to the UAV, the rotation and translation between $S_{UAV}$ and $S_{CAM}$ can be measured.

Referring again to **Fig. 3**, at step 322, the UAV is localized in the coordinate system $S_{MC}$. To this purpose, the 3D locations of the markers (M) attached to the UAV are obtained from the motion capture system, thanks to the transform T$(S_{UAV;}S_{MC})$ between the coordinate systems $S_{UAV}$ and $S_{MC}$ obtained from the known locations of these markers in $S_{UAV;}$ and their positions in $S_{MC}$..

At step 323, the locations MOI$(S_{MC})$ of the markers of interest in the coordinate system $S_{MC}$ are determined by converting the 3D locations MOI$(S_{UAV})$ computed at step 321 by help of the 3D geometric transformation T$(S_{UAV;}S_{MC})$ computed at step 322.

At step 330, the control of the UAV trajectory is performed from the 3D locations M$(S_{MC})$ of the markers M. This step simply relies on the previously described UAV navigation control software to programmatically constrain the UAV to follow a determined trajectory. At any time during the motion capture session, the target position of the UAV within this trajectory is defined by its coordinates $(X_T, Y_T, Z_T)$ in the coordinate system $S_{MC}$:

- $(X_T, Y_T)$ are set to the current horizontal location of the center of gravity of the markers of interest in the 3D coordinate system $S_{MC}$, computed in the third module, offset by a predetermined vector $(\Delta X_T, \Delta Y_T)$. Let $(X_{CAM}, Y_{CAM})$ be the horizontal offset of the optical center of the camera C in the coordinate system $S_{UAV}$.

In a preferred embodiment, $(\Delta X_T, \Delta Y_T)$ is set to $(-X_{CAM}, -Y_{CAM})$, which amounts to constraining the optical center of the camera C to be positioned just above the center of gravity of the markers of interest.

- $Z_T$ is set to $Z_{UAV}$, constraining the UAV to remain at a fixed height above the floor of the capture volume, this height being large enough to avoid disturbing the actors play, as explained previously.

According to a variant, the control of the UAV trajectory is performed manually by operating the user interface of the UAV navigation control.

At step 340, the locations MOI$(S_{MC})$ of the markers of interest are transmitted to the optical motion capture system using, for example, the onboard UAV transmission means.

According to an embodiment, the steps 321-323 and 330 and 340 in **Fig. 3** are performed at predefined time intervals for the whole duration of a motion capture session.

According to a variant, several UAVs, each equipped with a camera C, a depth sensor DS and a pattern of at least four non-planar markers for their localization in the capture volume, are used simultaneously during the steps 321-323 and 330 and 340. Each of the UAVs ($i$) is assigned a specific horizontal position target offset $(\Delta X_{T,i}, \Delta Y_{T,i})$, and, optionally, a specific target altitude $Z_{UAV,i}$ in the capture volume, in order to provide different viewpoints on the markers of interest. The values of the $(\Delta X_{T,i}, \Delta Y_{T,i})$ and the $Z_{UAV,i}$ are chosen to maintain a minimal separation distance between the UAVs, in order to avoid aerodynamic interference. Each of the UAVs independently computes the locations of the markers of interest in the 3D coordinate system $S_{MC}$ of the capture volume and transmits them to the motion capture system.

According to a variant of this variant, the consistency of this data is checked, outlying position estimates are rejected, and eventually, is computed a robust estimate of the positions of the markers of interest at each transmission instant from the consistent estimates provided by each UAV. This robust estimate may be computed, for instance, as the median value of the estimates provided by each UAV.

On **Fig. 2-4**, the modules are functional units, which may or not be in relation with distinguishable physical units. For example, these modules or some of them may be brought together in a unique component or circuit, or contribute to functionalities of a software. *A contrario*, some modules may potentially be composed of separate physical entities. The apparatus which are compatible with the invention are implemented using either pure hardware, for example using dedicated hardware such ASIC or FPGA or VLSI, respectively «Application Specific Integrated Circuit », « Field-Programmable Gate Array », « Very Large Scale Integration », or from several integrated electronic components embedded in a device or from a brand of hardware and software components.

**Figure 5** represents an exemplary architecture of a device 50 configured to control the navigation of an unmanned aerial vehicle.

Device 50 comprises following elements that are linked together by a data and address bus 51:

- a microprocessor 52 (or CPU), which is, for example, a DSP (or Digital Signal Processor);
- a ROM (or Read Only Memory) 53;
- a RAM (or Random Access Memory) 54;
- an I/O interface 55 for reception of data to transmit, from an application; and
- a battery 56

According to a variant, the battery 56 is external to the device. Each of these elements of **Fig. 5** are well-known by those skilled in the art and won't be disclosed further. ROM 63 comprises at least a program and parameters. Algorithm of the method according to the invention is stored in the ROM 53. When switched on, the CPU 52 uploads the program in the RAM and executes the corresponding instructions.

RAM 54 comprises, in a register, the program executed by the CPU 52 and uploaded after switch on of the device 50, input data in a register, intermediate data in different states of the method in a register, and other variables used for the execution of the method in a register.

The microprocessor 52, the I/O interface 54, the ROM and the RAM are configured to control the navigation of an unmanned aerial vehicle such as a UAV, i.e. these elements are configured to specify a target position of the unmanned aerial vehicle at each time instant, corresponding to a motion trajectory in the 3D coordinate system $S_{MC}$ which is defined from the 3D locations $MOI(S_{MC})$ of markers of interest as above-explained. It is then possible to control the unmanned aerial vehicle (a UAV for example) in such a way that a part of it follows a motion trajectory in the coordinate system $S_{MC}$ at a predefined speed in order to capture images of markers which are not visible to a sufficient number of cameras of the camera setup of the mocap system.

According to a variant, the device comprises a Graphical User Interface 57 which is configured to allow a user to specify a target position of the unmanned aerial vehicle UAV at a time instant. The unmanned aerial vehicle UAV trajectory control is then operated and/or displayed from the Graphical User Interface 57 that can take the form for example of a joystick or a tactile interface, *e.g.*, on a tablet.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include a post-processor processing, a pre-processor, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

## Claims

1. A method for capturing the 3D motion of an object from the 3D locations of markers placed on this object, **characterized in that** the 3D location of at least one marker is determined from at least one image taken by a camera and from a depth information obtained from a depth sensor.

2. Method according to the claim 1, wherein the camera and the depth sensor are moveable along a same motion trajectory determined in such a way that at least one marker placed on the object always remains in the field of view of the camera and the depth sensor, which are set up in such a way that their optical centers are close to one another.

3. Method according to one of the preceding claims, wherein the 3D location of at least one marker placed on the object is determined from the 3D locations of at least another one markers (M) placed on an unmanned aerial vehicle.

4. Unmanned aerial vehicle **characterized in that** it comprises a camera, a depth sensor and a controller for controlling its trajectory in such a way that at least one marker placed on an object always remain in the field of view of the camera and the depth sensor.

5. Unmanned aerial vehicle according to the claim 4, wherein the camera C and the depth sensor DS are parts of a same device.

6. A motion capture system comprising a camera setup, **characterized in that** the camera setup is completed by a camera and a depth sensor both onboard an unmanned aerial vehicle.

7. A motion capture system according to the claim 6, wherein the unmanned aerial vehicle conforms to the claim 4 or 5.

**Fig. 1**

$$T_i, M_i$$

$$\Delta w_F$$

$r_T(t)$

| Position Control | $\Phi^{des}(t)$ $\theta^{des}(t)$ $\psi^{des}(t)$ | Attitude Control | $\Delta w_\phi$ $\Delta w_\theta$ $\Delta w_\psi$ | Motor Dynamics | Rigid Body Dynamics |

$$\dot{p}(t), \dot{q}(t), \dot{q}(t)$$

r(t)

$$\int \qquad \int$$

$$\ddot{r}$$

**Fig. 2**

310
Move UAV to Initial position

320

321
Determine the locations of the markers of interest in the coordinate system of the UAV

MOI($S_{UAV}$)

322

Determine the locations of the markers of interest in the coordinate system of the capture volume

T($S_{UAV};S_{MC}$)

Determine the locations of the M markers in the coordinate system of the capture volume

323

M($S_{MC}$)

330

MOI($S_{MC}$)   340

Transmit to Mocap system

UAV trajectory control

**Fig. 3**

Markers of interest

$$\downarrow$$

| Detecting in camera image | 3211 |

$$\downarrow \quad (x_i, y_i) \quad 3212$$

| Computing 3D locations in $\underline{S}_{CAM}$ | $\leftarrow r_i$ |

$$\downarrow \quad (X_i, Y_i Z_i)$$

| Computing 3D locations in $\underline{S}_{UAV}$ | 3213 |

$$\downarrow$$

$$MOI(S_{UAV})$$

**Fig. 4**

**Fig. 5**

Europäisches
Patentamt
European
Patent Office
Office européen
des brevets

## EUROPEAN SEARCH REPORT

Application Number

EP 13 30 6268

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/315524 A1 (GORDON DEMIAN [US] ET AL) 16 December 2010 (2010-12-16) * abstract; figures 8,9 * * paragraphs [0024], [0025], [0036], [0037] * | 1-7 | INV. G06T7/20 |
| X | US 2012/196679 A1 (NEWCOMBE RICHARD [GB] ET AL) 2 August 2012 (2012-08-02) * abstract; figure 1 * * paragraph [0022] * | 1-7 | |
| A,D | Gutemberg B Guerra-Filho: "Optical Motion Capture: Theory and Implementation", Journal of Theoretical and Applied Informatics, 2005, pages 1-29, XP055104997, Retrieved from the Internet: URL:http://citeseerx.ist.psu.edu/viewdoc/download?doi=10.1.1.106.7248&rep=rep1&type=pdf [retrieved on 2014-02-28] * the whole document * | 1-7 | |
| A | MICHAEL N ET AL: "The GRASP Multiple Micro-UAV Testbed", IEEE ROBOTICS & AUTOMATION MAGAZINE, IEEE SERVICE CENTER, PISCATAWAY, NJ, US, vol. 17, no. 3, September 2010 (2010-09), pages 56-65, XP011317945, ISSN: 1070-9932 * abstract; figure 3 * | 3-7 | **TECHNICAL FIELDS SEARCHED (IPC)** G06T |

The present search report has been drawn up for all claims

| Place of search | Date of completion of the search | Examiner |
|---|---|---|
| Munich | 28 February 2014 | Meinl, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 30 6268

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2014

| Patent document cited in search report | | Publication date | Patent family member(s) | | Publication date |
|---|---|---|---|---|---|
| US 2010315524 | A1 | 16-12-2010 | CN | 101796545 A | 04-08-2010 |
| | | | EP | 2191445 A2 | 02-06-2010 |
| | | | JP | 2010541035 A | 24-12-2010 |
| | | | JP | 2013080473 A | 02-05-2013 |
| | | | US | 2010315524 A1 | 16-12-2010 |
| | | | WO | 2009032944 A2 | 12-03-2009 |
| US 2012196679 | A1 | 02-08-2012 | CN | 102622762 A | 01-08-2012 |
| | | | US | 2012196679 A1 | 02-08-2012 |
| | | | US | 2013244782 A1 | 19-09-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G.B. GUERRA-FILHOL.** Optical Motion Capture: Theory and Implementation. *Journal of Theoretical and Applied Informatics,* 2005
- **G.B. GUERRA-FILHO.** Optical Motion Capture: Theory and Implementation. *Journal of Theoretical and Applied Informatics,* 2005
- **N. MICHAEL et al.** The GRASP Multiple Micro UA V Testbed. *IEEE Robotics and Automation Magazine,* September 2010
- *Wikipedia page on PID controllers, http://en.wikipedia.org/wiki/PIO_controller*
- **M. POLLEFEYS.** Visual 3D modeling from images. *Proceedings of the 2004 Vision, Modeling and Visualization Conference VMV'04,* 2004